# EUROPÄISCHE PATENTSCHRIFT

(11) **EP 2 786 662 B1**
(45) Veröffentlichungstag und Bekanntmachung des Hinweises auf die Patenterteilung: **03.01.2018**
(21) Anmeldenummer: 13001704.9
(22) Anmeldetag: 03.04.2013
(51) Int. Cl.: A23L 13/70, A23L 19/00, A23L 5/42, A23L 33/10, A23L 19/12, A23B 7/154, A23B 7/157, A23B 7/08, A23B 4/02

(54) **Verfahren zum Einlagern von Substanzen in feste Lebensmittel**
Method for depositing substances into firm foodstuff
Procédé de stockage de substances dans des denrées alimentaires fermes

(43) Veröffentlichungstag der Anmeldung: 08.10.2014
(73) Patentinhaber: ADM WILD Europe GmbH & Co. KG, 69214 Eppelheim (DE)
(72) Erfinder: Chatard, Dominique, 69121 Heidelberg (DE); Tilz, Wolfgang, 68723 Schwetzingen (DE); De With, Axel, 68723 Plankstadt (DE); Borrmann, Thomas, 68789 St. Leon-Rot (DE)
(74) Vertreter: Grünecker Patent- und Rechtsanwälte PartG mbB

(56) Entgegenhaltungen:
- EP-A1- 0 404 543
- EP-A1- 1 806 213
- EP-A2- 0 351 145
- EP-A2- 2 636 388
- WO-A2-2007/066190
- DE-A1- 2 132 702
- DE-A1- 2 363 097
- DE-A1- 19 521 623
- DE-A1-102007 005 527
- FR-A1- 2 733 438
- US-A- 4 542 046
- US-A- 5 164 213
- US-A1- 2006 013 925
- US-A1- 2007 034 293
- US-A1- 2009 162 504
- US-A1- 2010 159 082
- US-A1- 2013 052 314
- DATABASE BIOSIS [Online] BIOSCIENCES INFORMATION SERVICE, PHILADELPHIA, PA, US; 2004, JENSEN M ET AL: "Enzymatic firming of processed red pepper by means of exogenous pectinesterase", XP002714942, Database accession no. PREV200400399969 & FOOD BIOTECHNOLOGY (NEW YORK), Bd. 18, Nr. 2, 2004, Seiten 217-227, ISSN: 0890-5436
- DATABASE WPI Week 201079 Thomson Scientific, London, GB; AN 2010-P72905 XP002714943, & CN 101 869 133 A (BEIJING ACAD AGRIC&FORESTRY SCI) 27. Oktober 2010 (2010-10-27)
- JENSEN M., PETERSEN B.R., ADLER-NISSEN J.: "Enzymatic Firming of Processed Red Pepper by Means of Exogenous Pectinesterase", FOOD BIOTECHNOLOGY, vol. 18, no. 2, 2004, pages 217-227, DOI: 10.1081/FBT-200025667 Retrieved from the Internet: URL:http://www.tandfonline.com/doi/pdf/10. 1081/FBT-200025667> [retrieved on 2015-04-23]

## Beschreibung

Die vorliegende Erfindung betrifft ein Verfahren zum Einlagern von Substanzen in feste Lebensmittel.

Das Einlagern von Substanzen in Lebensmitteln wird eingesetzt, um den Gehalt einer oder mehrerer bestimmter Substanzen in dem Lebensmittel zu erhöhen, z. B. zum Haltbarmachen und Konservieren. Weitere Verfahren zum Haltbarmachen sind z. B. Einkochen, Einfrieren, Trocknen, Einlegen in Alkohol oder konservierende Lösungen oder Vergären.

Ein bekanntes Verfahren zum Haltbarmachen von Früchten und Obst, das auf dem Einlagern von Zucker beruht, ist das Kandieren. Beim Kandieren wird der Zuckergehalt von Früchten oder Obst erhöht. Das Kandieren wird außerdem genutzt, um eine geschmackliche Verbesserung der Früchte oder des Obsts zu erreichen.

Das Kandieren von Früchten ist ein Vorgang, bei dem das Zellwasser der Frucht durch Sirupe von Zuckern weitgehend ersetzt wird. Dabei werden Früchte oder Fruchtstücke in eine Zuckerlösung eingelegt. Die Kandierung basiert auf einem osmotischen Vorgang, bei dem das in der Frucht enthaltene Wasser, die Farbe, die organischen Säuren, Mineralien und Aromen teilweise austreten und dabei in die umgebende Lösung übergehen. Durch das freiwerdende Volumen kann die Zuckerlösung in die Frucht eintreten.

Der osmotische Vorgang erfolgt durch den Konzentrationsunterschied zwischen dem in der Frucht enthaltenen Wasser, welches üblicherweise ca. 85 - 90 Gew.-% beträgt, und dem die Frucht umgebenden Zuckersirup. Aufgrund der Konzentrationsunterschiede zwischen Frucht und umgebender Lösung bestehen Potentialdifferenzen. Bei der Osmose findet ein Ausgleich der Potentialdifferenzen statt, die osmotische Bewegung hält solange an, bis das chemische Potential der diffundierenden Komponenten auf beiden Seiten der Membran (d. h. zwischen Frucht und Lösung) ausgeglichen ist und sich ein osmotisches Gleichgewicht eingestellt hat. Da sich aufgrund der Potentialdifferenz die Konzentration aller gelösten Stoffe ausgleicht, steigt dabei die Konzentration des Zuckers in der Frucht und gleichzeitig entsteht ein Konzentrationsrückgang in der Lösung. Bei der Osmose treten zwei unterschiedlich gerichtete Massenströmungen auf: Wasser strömt aus der Frucht in die umgebende Lösung und gelöste Stoffe strömen von der Lösung in die Frucht. Hat sich zwischen der Frucht und der Lösung ein Gleichgewicht eingestellt, kann durch Zugabe von Zucker zu der Lösung oder durch das Entziehen von Wasser (wie z.B. durch das Eindampfen der Zuckerlösung, ohne Frucht in einem separaten Prozessschritt) erneut eine Potentialdifferenz hergestellt werden.

Osmose bezeichnet eine Diffusion durch eine semipermeable Membran, d. h. diese ist nur selektiv durchlässig. Die Semipermeabilität einer Zellmembran ist auch abhängig von ihrer Funktion. In der Regel kann der Konzentrationsausgleich zwischen Zellinnerem und -äußerem über Diffusion von Stoffen erreicht werden. Allerdings können die jeweiligen Diffusionsgeschwindigkeiten durch eine semipermeable (teildurchlässige) Membran unterschiedlich sein. In den meisten lebenden Zellen kann z. B. Wasser passiv diffundieren, andere Stoffe wie Glucose können nur durch eine sogenannte erleichterte Diffusion in die Zelle eindringen. Bei der erleichterten Diffusion erfolgt der Stofftransport mit Hilfe von Transportproteinen.

Außerdem können physikalische Größen (z. B. Temperatur, Druck, elektrische Felder), ggf. verursacht durch lokale mechanische Effekte wie Verformung durch den Phasenübergang des Wassers beim Verdampfen oder durch elektromagnetische Wellen, einen Einfluss auf den Diffusionsprozess haben.

Der lösliche Feststoffanteil im Fruchtinneren beträgt bei kandierten Früchten bis zu 80 Gew.-%. Die Haltbarkeit von kandierten Früchten ist über viele Monate hinweg auch ungekühlt gewährleistet. Allerdings sind die Kandierungszeiten relativ lang und liegen je nach Fruchtart und Früchtegröße bei bis zu 12 Tagen. Außerdem geht die natürliche Färbung der Frucht während der Kandierung verloren. Daher werden häufig zum Ausgleich Farbstoffe, wie Naturfarbstoffe, die nicht kennzeichnungspflichtig sind, oder kennzeichnungspflichtige Farbstoffe, z. B. E120, E104, E127 hinzugefügt. Auch Aromen gehen während der Kandierung verloren. Aus diesem Grund werden der Lösung in der Regel Aromen hinzugegeben, sodass die Frucht nach der Kandierung einen aromatischen Geschmack aufweist. Dazu werden unter anderem naturidentisches Aroma und Zitronensäure (E330) verwendet. Zusätzlich werden zur Stabilisierung Antioxidationsmittel und Schwefeldioxid (E220) eingesetzt.

Ein weiteres Verfahren zum Haltbarmachen von Lebensmitteln, das auf der Einlagerung von Salz beruht, ist das Pökeln. Pökeln wird üblicherweise verwendet, um Fleisch haltbar zu machen. Dabei wird durch Osmose dem Fleisch Wasser entzogen und der Salzgehalt wird erhöht. Außerdem besitzt Salz (NaCl) bzw. Pökel-Salz auch eine konservierende Wirkung.

Ein weiteres Verfahren zum Haltbarmachen von Lebensmitteln ist die Vakuumtrocknung. Dabei wird den Lebensmitteln durch Anlegen von Vakuum Wasser entzogen. Allerdings werden durch das Vakuum auch viele Aromastoffe entfernt.

Die US 666,413 beschreibt eine Vorrichtung und ein Verfahren zur Kandierung von Früchten mit erhitzten Zuckerlösungen. Durch Anlegen von Vakuum werden Wasser und Zuckersirup in ein Druckgefäß, das die Früchte enthält, gepumpt. Die Zugabe von Wasser bzw. Sirup wird so oft wiederholt, bis die Zuckerlösung in dem Druckgefäß die gewünschte Konzentration besitzt. Nachdem die gewünschte Konzentration eingestellt ist, wird Wasser im Verhältnis zur Verdampfungsrate zugegeben, bis die Kandierung abgeschlossen ist.

Zhao und Xie, Trends in Food Science & Technology 2004, 434-451 beschreiben die Technik der Vakuumimprägnierung. Die Vakuumimprägnierung ermöglicht die Einlagerung von gewünschten Substanzen in Lebensmittel. Dabei wird ein Produkt in eine Lösung eingelegt und Vakuum wird für eine kurze Zeit angelegt. Anschließend wird das Vakuum entfernt und der Druck wieder auf Atmosphärendruck erhöht. Im ersten Schritt unter Vakuum werden Gase, die in dem Produkt enthalten sind, wegen deren überproportionalen Volumenzunahme entfernt / verdrängt. Bei Erhöhung auf Atmosphärendruck kann die umliegende Flüssigkeit an Stelle des entzogenen Gases, in die entstandenen Volumina hineinfließen.

In dem Artikel werden außerdem unterschiedliche osmotische Verfahren beschrieben: die osmotische Dehydratisierung, die osmotische Dehydratisierung im Vakuum und die osmotische Dehydratisierung mit Vakuumpulsen. Bei der osmotischen Dehydratisierung wird wasserhaltiges Lebensmittel in eine hochkonzentrierte Zucker- oder Salzlösung eingelegt. Die osmotische Dehydratisierung entfernt einen erheblichen Anteil des Wassers, während nur geringe Mengen an Feststoffen eingelagert werden. Bei der osmotischen Dehydratisierung im Vakuum wird der Stoffaustausch deutlich erhöht und damit eine deutliche Verkürzung der Behandlungszeit erreicht. Auch hier wird nur eine geringe Menge an Feststoffen eingelagert. Bei der osmotischen Dehydratisierung mit Vakuumpulsen wird das Lebensmittel in die osmotische Lösung eingelegt und Vakuum wird für eine kurze Zeit (5 bis 15 min) angelegt. Anschließend wird das Vakuum entfernt und der Druck wieder auf Atmosphärendruck erhöht.

Paes et al., Brazilian Archives of Biology and Technology 2008, 51 (4), 799-806 beschreiben eine Vakuumimprägnierung von Äpfeln bei verschiedenen Temperaturen. Dabei werden die Äpfel für 25 min bei 40 mbar in eine Zuckerlösung mit 50 °Brix eingelegt. Abschließend erfolgt eine Relaxation von 15 min. Das Gewichtsverhältnis von Frucht zu Zuckerlösung beträgt dabei 1 : 50, um Änderungen in der Zuckerkonzentration der Lösung zu verhindern. In diesem Verfahren ist eine große Menge an Zuckerlösung notwendig, die, aufgrund der Anreicherung an gelösten Stoffen aus den behandelten Lebensmitteln, nur sehr bedingt weiterverwendet werden kann und anschließend entsorgt werden muss. Dies ist nachteilig im Hinblick auf Wirtschaftlichkeit und Nachhaltigkeit.

Ursachi et al., Journal of Agroalimentary Processes and Technologies 2009, 15(2), 316-319 beschreiben ebenfalls die Vakuumimprägnierung von Früchten. Dabei werden Äpfel mit einer Imprägnierlösung im Vakuum behandelt. Das Verhältnis von Frucht zu Imprägnierlösung beträgt dabei 1:10. Auch hier sind große Mengen an Imprägnierlösung notwendig.

Barat et al., Journal of Food Science 2002, 67(8), 3046-3052 beschreiben eine Vakuumimprägnierung von Ananas, wobei die Früchte mit einer Imprägnierlösung für 15 min bei 50 mbar und 15 min bei Atmosphärendruck behandelt werden. Das Verhältnis von Frucht zu Imprägnierlösung ist dabei 1 : 20. In diesem Verfahren sind ebenfalls große Mengen an Imprägnierlösung notwendig.

Die DE-A-199 24 624 beschreibt eine Vorrichtung und ein Verfahren zur Trocknung von Produkten. Dabei wird das zu trocknende Produkt mit einem Mikrowellenstrahler und mindestens einem Heizelement erwärmt. Durch den Mikrowellenstrahler wird das Produkt im Inneren erwärmt, während das Heizelement die Oberfläche des zu trocknenden Produkts erwärmt. Zur Unterstützung des Trocknungsvorgangs kann das Produkt in einem Druckgefäß, in dem Unterdruck herrscht, behandelt werden. Durch den Unterdruck wird der Austritt des Feuchtigkeitsdampfs aus dem zu trocknenden Produkt vereinfacht. Allerdings können bei der Trocknung Aromastoffe des zu trocknenden Produkts mit dem Wasserdampfanteil entfernt werden.

Die Rückgewinnung von Aromastoffen beim Bierbrauen wird in der DE-A-10 2007 045 685 beschrieben. Dabei wird der aromahaltige Brüden, der während der Kochphase der Würze entweicht, in eine Rektifikationskolonne geleitet, in welcher die Dämpfe rektifiziert werden, wobei aromahaltige Destillate gewonnen werden, die entweder wieder der Würze nach der Kochphase zugeführt oder in einem Behälter gespeichert werden können.

Die EP-A-0 292 048 beschreibt ein Verfahren zur Herstellung eines Saftes und der Rückgewinnung der Aromastoffe, die bei der Herstellung freigesetzt werden. Die flüchtigen Aromastoffe werden durch einen Tropfenabscheider an der Oberseite einer Stripperkolonne geleitet, und bei Temperaturen von 105 °F (40.6 °C) bis -320 °F (-196 °C) in zwei oder mehreren hintereinander angeordneten Kühlern unterschiedlicher Temperaturen kondensiert. In der ersten Kühlerstufe mit einer Temperatur von 60 °F (15.6 °C) bis 105 °C (40.6 °C) werden dabei primär Wasser und einige der Aromastoffe kondensiert. In der zweiten Stufe bei Temperaturen zwischen 33 °F (0.5 °C) bis 60 °F (15.6 °C) werden ebenfalls Wasser und die weniger leicht flüchtigen Substanzen kondensiert. In der dritten Stufe bei Temperatur von -50 °F (-45.5 °C) bis -320 °F (196 °C) werden die flüchtigen Aromastoffe kondensiert.

Die US 2013/0052314 offenbart ein Verfahren zur Herstellung von Lebensmitteln, bei dem dem Lebensmittel eine flüssige Substanz zugegeben wird und die Mischung bei 74 - 104°C einem ohmschen Erwärmen ausgesetzt wird. Vor dem Erwärmen kann der Druck auf 67 bis 1016 mbar reduziert werden.

Die WO 2007/066190 offenbart ein Verfahren zur Herstellung eines Lebensmittels, bei dem ein Gemüse in eine Lösung getaucht wird unter Verwendung eines Drucks von 0 bis 867 mbar.

Die EP-A-0404543 offenbart ein Verfahren zur Herstellung von Trockenfrüchten, bei dem die erwärmte Frucht einem Vakuum von 30 bis 1000 mbar ausgesetzt wird.

Die Aufgabe der vorliegenden Erfindung ist es, ein Verfahren zum Einlagern einer Substanz in ein festes Lebensmittel bereitzustellen, das effizient und wirtschaftlich ist und ein Lebensmittel mit natürlichem Geschmack und Aussehen (Farbe und Struktur) bereitzustellen und ggf. haltbar zu machen. Diese Aufgabe wird gelöst durch ein Verfahren gemäß Anspruch 1.

Überraschenderweise ermöglicht das erfindungsgemäße Verfahren die Einlagerung einer Substanz in ein festes Lebensmittel, wobei der Anteil der Lösung der einzulagernden Substanz gegenüber den im Stand der Technik beschriebenen Verfahren deutlich reduziert ist.

Bevorzugte Ausführungsformen sind in den Unteransprüchen 2 bis 8 beschrieben.

Erfindungsgemäß wird unter dem Begriff "festes Lebensmittel" ein Lebensmittel verstanden, dessen Zellstruktur vorhanden ist und das eine definierte Form aufweist. Beispiele für feste Lebensmittel sind Früchte, Gemüse, Fleisch, Fisch, Pilze und Stücke davon.

Geeignete Früchte sind z. B. Äpfel, Ananas, Birnen, Kirschen, Himbeeren, Erdbeeren, Tomaten oder Paprika.

Geeignete Gemüse sind z. B. Wurzel- und Knollengewächse, wie Rettich, Karotten, Knollensellerie, Ingwer, Topinambur, oder Kartoffeln, oder Zwiebelgemüse, wie Schalotten, Zwiebel und Knoblauch.

Geeignetes Fleisch ist z. B. Fleisch vom Rind, Lamm, oder Rentier.

Geeignete Fische sind z. B. Forelle oder Hering.

Unter dem Begriff "Einlagern" wird erfindungsgemäß das Einbringen einer Substanz, hier in das feste Lebensmittel, verstanden. Dabei dringt die Substanz in die Zellen des festen Lebensmittels ein. Der Begriff "Imprägnieren" ist gleichbedeutend und wird alternativ verwendet.

Unter dem Begriff "Lösung der einzulagernden Substanz" wird erfindungsgemäß eine Lösung verstanden, die die einzulagernde Substanz enthält (alternative Bezeichnung Imprägnierlösung). So enthält z. B. eine Zuckerlösung als einzulagernde Substanz Zucker.

Vorzugsweise ist das feste Lebensmittel ausgewählt aus Früchten, Gemüse, Fisch, oder Fleisch. Besonders bevorzugt ist das feste Lebensmittel ausgewählt aus Beerenfrüchten, Steinobst, Melonen, Kürbisfrüchten, Knollengewächsen, Wurzelfrüchten, rotes Fleisch und Salzwasserfischen. Insbesondere ist das feste Lebensmittel ausgewählt aus Apfel, Ananas, Himbeeren, Erdbeeren, Ingwer, Kartoffeln, oder Rindfleisch. In einer weiteren bevorzugten Ausführungsform in Verbindung mit einer der oben oder unten genannten Ausführungsformen beträgt das Gewichtsverhältnis von festem Lebensmittel zu Lösung 5 : 1 bis 15 : 1, insbesondere 10:1.

Die wässrige Lösung der einzulagernden Substanz ist eine Zuckerlösung, ein Zuckersirup, eine Salzlösung, eine Lösung mit ernährungsphysiologisch bzw. gesundheitlich positiver Wirkung, eine aromatisierte oder gefärbte Lösung, eine Lösung mit Calcium-Salzen und Pectinmethylesterase zur Stabilisierung des festen Lebensmittels, eine Lösung zum Konservieren als Schutz vor mikrobiologischen Verderben bzw. Abbau, oder Gemisch daraus. Insbesondere ist die Lösung der einzulagernden Substanz ein Zuckersirup.

Unter dem Begriff "eine Lösung mit ernährungsphysiologisch bzw. gesundheitlich positiver Wirkung" wird erfindungsgemäß eine Lösung verstanden, die einen oder mehrere ernährungsphysiologisch bzw. gesundheitlich positiv wirksame Inhaltsstoffe besitzt. Ernährungsphysiologisch bzw. gesundheitlich positiv wirksame Inhaltsstoffe sind z. B. Vitamine, Mineralstoffe, Ballaststoffe, sekundäre Pflanzeninhaltsstoffe, wie z.B. Polyphenole, Phytosterine, Carotinoide, blutzuckerregulierende Zuckeralkohole, Starter-Kulturen mit probiotischer Wirkung wie Milchsäure- und Bifidobakterien z. B. Lactobacillus acidophilus, Lactobacillus sakei, Lactobacillus rhamnosus, Bifidobacterium longum oder Gemische daraus.

Unter dem Begriff "aromatisierte Lösung" wird erfindungsgemäß eine Lösung verstanden, die einen oder mehrere Aromastoffe enthält. Übliche Aromastoffe sind z. B. für Pfirsich Gamma-Decalacton in einer Konzentration von 5 ppm und für Erdbeere Furaneol und Maltol jeweils in einer Konzentration von 5 und 10 ppm oder Gemische daraus.

Unter dem Begriff "gefärbte Lösung" wird erfindungsgemäß eine Lösung verstanden, die einen oder mehrere Farbstoffe enthält. Übliche natürliche Farbstoffe sind anthocyanhaltige Extrakte z. B. aus Schwarzen Karotten oder aus roten Beerenfrüchten, betaninhaltige Extrakte z. B. aus Rote Bete, chlorophyllhaltige Extrakte z. B. aus Brennnessel, Spinat, carotinoidhaltige Extrakte z. B. aus Karotten, Tomaten, oder Gemische daraus.

Unter dem Begriff "Lösung zum Konservieren als Schutz vor mikrobiologischen Verderben bzw. Abbau" sind Lösungen zu verstehen, die in Lebensmitteln zugelassene Salze wir Kochsalz (NaCl), Nitrit oder Nitrat, Sorbate, Schwefelverbindungen oder Benzoate enthalten, aber auch Mikrobizide, die Hölzer und Rinde vor dem mikrobiologischen Abbau (Faulen) schützen.

In einer weiteren bevorzugten Ausführungsform in Verbindung mit einer der oben oder unten genannten Ausführungsformen umfasst das erfindungsgemäße Verfahren das Kondensieren der gebildeten Abluft. Das Kondensieren der Abluft kann in der vom Fachmann bekannten Weise erfolgen, z. B. mit Kühlfallen oder Kühler.

Unter dem Begriff "Abluft" wird erfindungsgemäß die aus einem Raum frei oder gezwungen abströmende Luft verstanden.

In einer weiteren bevorzugten Ausführungsform in Verbindung mit einer der oben oder unten genannten Ausführungsformen kann eine Fraktionierung der Abluft erfolgen, z. B. durch Kühlung der einzelnen Kühlfallen auf unterschiedliche Temperaturen.

Durch das Kondensieren der Abluft können freigesetzte Aromastoffe zurückgewonnen werden. In einer bevorzugten Ausführungsform in Verbindung mit einer der oben oder unten genannten Ausführungsformen werden die aus der Abluft zurückgewonnenen Aromastoffe wieder dem Lebensmittel zugesetzt.

In einer bevorzugten Ausführungsform in Verbindung mit einer der oben oder unten genannten Ausführungsformen beträgt der Druck 5 bis 50 mbar, insbesondere 15 bis 20 mbar.

In einer weiteren bevorzugten Ausführungsform in Verbindung mit einer der oben oder unten genannten Ausführungsformen wird die Lösung erwärmt.

In einer anderen bevorzugten Ausführungsform in Verbindung mit einer der oben oder unten genannten Ausführungsformen beträgt die Temperatur der Lösung 0 bis 65 °C, besonders bevorzugt 20 bis 50 °C, insbesondere 30 bis 40 °C. Vorzugsweise erfolgt das Erwärmen durch elektromagnetische Wellen, z. B. Mikrowellen, Radiowellen oder infraroter Strahlung. Das Erwärmen kann aber auch pulsweise durch Zu- und Abschalten der Heizenergie erfolgen. Das Heizen kann am Boden des Behältnis erfolgen, sodass durch aufsteigende Dampf-Blasen eine Zirkulation entsteht, die eine Durchwirbelung des zu behandelnden Lebensmittels bewirkt und dadurch eine Überhitzung des Lebensmittels vermieden wird.

Wird das erfindungsgemäße Verfahren bei diesen Temperaturen durchgeführt, wird der Einlagerungsvorgang erleichtert und ein Verlust an natürlichen Aromastoffen und Farbstoffen reduziert.

Wird das erfindungsgemäße Verfahren bei diesen Temperaturen durchgeführt, erfolgt die Einlagerung der gewünschten Substanz außerdem besonders schonend.

In einer weiteren bevorzugten Ausführungsform in Verbindung mit einer der oben oder unten genannten Ausführungsformen findet das erfindungsgemäße Verfahren unter Sauerstoffausschluss statt. Wird das erfindungsgemäße Verfahren unter Sauerstoffausschluss durchgeführt, kommt es zu keinem Qualitätsverlust durch Oxidation.

In einer weiteren bevorzugten Ausführungsform in Verbindung mit einer der oben oder unten genannten Ausführungsformen beträgt die Konzentration der Lösung 300 bis 850 g/L, besonders bevorzugt 400 bis 800 g/L, insbesondere 500 bis 750 g/L. Vorzugsweise beträgt die Zucker-Konzentration der Lösung 300 bis 850 g/L, besonders bevorzugt 400 bis 800 g/L, insbesondere 500 bis 750 g/L.

In einer weiteren bevorzugten Ausführungsform in Verbindung mit einer der oben oder unten genannten Ausführungsformen besitzt die Lösung einen Brix von 50 bis 80 °Bx.

Der Begriff "°Bx" (Grad Brix) ist eine Maßeinheit der relativen Dichte von Flüssigkeiten. Eine Flüssigkeit hat ein Grad Brix (1 °Bx), wenn sie dieselbe Dichte hat wie eine Lösung von 1 g Saccharose in 100 g Saccharose/Wasser-Lösung; sie hat 10 Brix (10 °Bx), wenn ihre Dichte die einer Lösung von 10 g Saccharose in 100 g Saccharose/Wasser-Lösung (entspricht einer zehnprozentigen Lösung) ist.

In einer bevorzugten Ausführungsform in Verbindung mit einer der oben oder unten genannten Ausführungsformen enthält die Lösung zusätzlich mindestens einen Farbstoff, Geschmacksverstärker, Antioxidationsmittel, Säuerungsmittel, wie Zitronensäure oder Tri-Natrium-Citrat, Aromastoff, Konservierungsstoff, einen Stoff mit ernährungsphysiologisch bzw. gesundheitlich positiver Wirkung sowie Kombinationen daraus. Besonders bevorzugt enthält die Lösung einen blutzuckerregulierenden Stoff, insbesondere einen Zuckeralkohol.

Um das erfindungsgemäße Verfahren durchzuführen wird üblicherweise eine Vorrichtung eingesetzt, die ein Gefäß, in dem ein Unterdruck erzeugt werden kann, und eine Pumpe zum Reduzieren des Drucks in dem Gefäß umfasst.

In einer bevorzugten Ausführungsform in Verbindung mit einer der oben oder unten genannten Ausführungsformen umfasst die Vorrichtung außerdem eine Heizvorrichtung zum Erwärmen der Lösung.

In einer weiteren bevorzugten Ausführungsform in Verbindung mit einer der oben oder unten genannten Ausführungsformen umfasst die Vorrichtung mindestens eine Kühlfalle oder Kondensor zum Auffangen der Abluft.

Vorzugsweise sind nur das Gefäß und die Kühlfalle an eine Vakuumpumpe angeschlossen. In der Kühlfalle werden die aus dem Gefäß austretenden Dämpfe kondensiert. Aus dem Kondensat können die flüchtigen Aromastoffe zurückgewonnen werden. Alternativ kann auch der gesamte Prozessraum einschließlich Heizvorrichtung unter Vakuum stehen.

In einer weiteren bevorzugten Ausführungsform in Verbindung mit einer der oben oder unten genannten Ausführungsformen der Vorrichtung wird die Abluft mittels eines eingebauten Sensors in der Verbindungsleitung zwischen dem Gefäß und der Kühlfalle überwacht, sodass die Energieleistung an das Signal des Sensors (z. B. Wasserdampfmenge) angepasst werden kann. Die Pumpe, die das Vakuum erzeugt, kann entsprechend geregelt werden, um die Energieaufnahme der Pumpe zu minimieren.

Mittels weiterer Sensoren in der Verbindungsleitung zwischen der ersten Kühlfalle und den nachgeschalteten Kühlfallen kann die Kondensation ggf. stufenweise überwacht werden.

Die vorliegende Erfindung wird durch die folgenden Beispiele näher erläutert.

### Beispiele

### Beispiel 1: Kandieren von Erdbeeren mit Zucker

1 kg tiefgefrorene Erdbeeren werden in einem Gefäß zu 0,2 kg einer 72 Gew.-%igen Zuckerlösung gegeben. Der Druck in dem Gefäß wird auf 20 mbar eingestellt. Durch Zuschalten einer im Reaktionsgefäß befindlichen oder von außen durch ein transparentes Reaktionsgefäß hindurch leuchtende Infrarotlampe werden die Erdbeeren auf eine Temperatur bis max. 50 °C erwärmt, wobei durch eine am Reaktionsgefäß angeschlossene Vakuumpumpe das eingestellte Vakuum von 20 mbar aufrecht erhalten wird. In einer der Pumpe vorgeschalteten Kühlfalle werden die in der Abluft enthaltenen Brüden kondensiert. Nach Auffangen einer Kondensatmenge von 900 ml wird der Druck im Reaktionsgefäß auf Normaldruck erhöht. Man erhält 0,3 kg kandierte Erdbeeren. Die kandierten Erdbeeren haben einen natürlichen Geschmack und ein geschrumpftes natürliches Aussehen.

### Referenzbeispiel 1: Imprägnieren von Kartoffeln mit einer salzigen Lösung mit Zwiebelaroma

1 kg geschnittene Kartoffeln werden in ein Gefäß zu 0,8 kg einer wässrigen Lösung von 0,04 kg Salz und 0,00025 g Zwiebelaroma (WILD Inc.) gegeben. Durch Zuschalten einer im Reaktionsgefäß befindlichen oder von außen durch ein transparentes Reaktionsgefäß hindurch leuchtende Infrarotlampe werden die Kartoffeln auf eine Temperatur von 70 °C erwärmt und nach dem Quellen der in den Kartoffeln enthaltenen nativen Stärke, durch eine am Reaktionsgefäß angeschlossene Vakuumpumpe ein Vakuum von 50 mbar eingestellt und anschließend aufrecht erhalten wird. In einer der Pumpe vorgeschalteten Kühlfalle werden die in der Abluft enthaltenen Brüden kondensiert. Nach 15 min wird der Druck im Reaktionsgefäß auf Normaldruck erhöht und die salzige Lösung entfernt. Anschließend wird der Prozess bei 20 mbar, 60 min. lang weitergeführt. Nach Auffangen einer Kondensatmenge von 700 ml wird der Druck im Reaktionsgefäß auf Normaldruck erhöht. Man erhält 0,25 kg teilgetrocknete, gegarte, Kartoffeln mit Zwiebelgeschmack.

### Referenzbeispiel 2: Pökeln von Rindfleisch mit Salzwasser

1 kg Rindfleisch wird in einem Gefäß zu 0,8 kg einer 5 Gew.-%igen Salzlösung gegeben, so dass das Fleisch bedeckt ist. Der Druck in dem Gefäß wird auf 20 mbar eingestellt. Durch Zuschalten einer im Reaktionsgefäß befindlichen oder von außen durch ein transparentes Reaktionsgefäß hindurch leuchtende Infrarotlampe wird das Rindfleisch auf eine Temperatur von 30 °C erwärmt, wobei durch eine am Reaktionsgefäß angeschlossene Vakuumpumpe das eingestellte Vakuum von 20 mbar aufrecht erhalten wird. In einer der Pumpe vorgeschalteten Kühlfalle werden die in der Abluft enthaltenen Brüden kondensiert. Nach 15 min wird der Druck im Reaktionsgefäß auf Normaldruck erhöht und die Salzlösung entfernt. Anschließend wird der Prozess bei 20 mbar, 60 min. lang weitergeführt. Nach Auffangen einer Kondensatmenge von 250 ml wird der Druck im Reaktionsgefäß auf Normaldruck erhöht. Man erhält 0,5 kg gepökeltes und teilgetrocknetes Rindfleisch.

## Patentansprüche

1. Verfahren zum Einlagern einer Substanz in einen organischen Feststoff, umfassend
- das Behandeln des organischen Feststoffs mit einer Lösung der einzulagernden Substanz und
- das Reduzieren des Drucks,
**dadurch gekennzeichnet, dass** das Gewichtsverhältnis von organischem Feststoff zu Lösung 5 : 1 bis 20 : 1 beträgt, der Druck 0,05 bis 50 mbar beträgt, als organischer Feststoff ein festes Lebensmittel verwendet wird und wobei als Lösung eine Zuckerlösung, ein Zuckersirup, eine Salzlösung, eine Lösung mit ernährungsphysiologischer bzw. gesundheitlich positiver Wirkung, eine Lösung mit Calcium-Salzen und Pectinmethylesterase, eine aromatisierte oder eine gefärbte Lösung, ein Konservierungsmittel oder Gemische daraus verwendet wird.

2. Verfahren nach Anspruch 1, wobei als Lebensmittel Früchte, Wurzeln, Gemüse, Fleisch oder Fisch verwendet wird.

3. Verfahren nach Anspruch 1 oder 2, wobei als Lösung eine wässrige Lösung verwendet wird.

4. Verfahren nach einem der Ansprüche 1 bis 3, weiterhin umfassend
- das Kondensieren der gebildeten Abluft.

5. Verfahren nach einem der Ansprüche 1 bis 4, wobei der organische Feststoff zusammen mit der vorhandenen Lösung erwärmt wird.

6. Verfahren nach einem der Ansprüche 1 bis 5, wobei die Temperatur der Lösung 0 °C bis 65 °C beträgt.

7. Verfahren nach einem der Ansprüche 1 bis 6, wobei die Lösung einen Brix von 30 bis 85 °Bx besitzt.

8. Verfahren nach einem der Ansprüche 1 bis 7, wobei die Lösung zusätzlich mindestens einen Farbstoff, Geschmacksverstärker, Antioxidationsmittel, Säuerungsmittel, Konservierungsstoff oder einen Stoff mit ernährungsphysiologisch bzw. gesundheitlich positiver Wirkung enthält.

## Claims

1. Method for storing a substance in an organic solid comprising
- the treatment of the organic solid with a solution of the substance to be stored and
- reduction of the pressure,
**characterised in that** the weight ratio of organic solid to solution is 5 : 1 to 20 : 1, the pressure amounts to 0.05 to 50 mbar, a solid food is used as the organic solid and wherein as solution a sugar solution, a sugar syrup, a salt solution, a solution with a positive nutritional-physiological or health effect, a solution with calcium salts and pectin methylesterase, an aromatized or coloured solution, a preservative or a mixture of these is used.

2. Method according to claim 1 wherein fruits, roots, vegetables, meat or fish is used as the food.

3. Method according to claim 1 or 2 wherein an aqueous solution is used as the solution.

4. Method according to one of the claims 1 to 3, furthermore comprising
- the condensation of the formed exhaust air.

5. Method according to one of the claims 1 to 4 wherein the organic solid is heated together with the existing solution.

6. Method according to one of the claims 1 to 5 wherein the temperature of the solution amounts to 0° C to 65° C.

7. Method according to one of the claims 1 to 6 wherein the solution has a Brix of 30 to 85° Bx.

8. Method according to one of the claims 1 to 7 wherein the solution additionally contains at least one colouring substance, flavour enhancer, antioxidant, acidifying agent, preservative or substance with a positive nutritional-physiological or health effect.

## Revendications

1. Procédé pour incorporer une substance dans une matière organique solide, comprenant
- le traitement de la matière organique solide avec une solution de la substance à incorporer, et
- la réduction de la pression,
**caractérisé en ce que** le rapport pondéral matière organique solide/solution est de 5 : 1 à 20 : 1, la pression est de 0,05 à 50 mbar, et l'on utilise en guise de matière organique solide un produit alimentaire solide, et en guise de solution, une solution de sucre, un sirop de sucre, une solution de sel, une solution à action positive sur le plan de la physiologie nutritionnelle et de la santé, une solution avec des sels de calcium et de la pectine-methylestérase, une solution aromatisée ou colorée, un conservateur ou des mélanges de ceux-ci.

2. Procédé selon la revendication 1, d'après lequel on utilise, en guise de produit alimentaire, des fruits, des racines, des légumes, de la viande ou du poisson.

3. Procédé selon la revendication 1 ou la revendication 2, d'après lequel on utilise, en guise de solution, une solution aqueuse.

4. Procédé selon l'une des revendications 1 à 3, comprenant, en outre,
- la condensation de l'air de rejet formé.

5. Procédé selon l'une des revendications 1 à 4, d'après lequel la matière organique solide est échauffée en commun avec la solution existante considérée.

6. Procédé selon l'une des revendications 1 à 5, d'après lequel la température de la solution est de 0°C à 65°C.

7. Procédé selon l'une des revendications 1 à 6, d'après lequel la solution présente un degré Brix d'une valeur de 30 à 85 °Bx.

8. Procédé selon l'une des revendications 1 à 7, d'après lequel la solution renferme en supplément au moins un colorant, un exhausteur de goût, un antioxydant, un acidifiant, un conservateur ou une substance à action positive sur le plan de la physiologie nutritionnelle et de la santé.
